# EUROPEAN PATENT SPECIFICATION

(11) **EP 1 273 559 B1**
(45) Date of publication and mention of the grant of the patent: **29.12.2004**
(21) Application number: 02022388.9
(22) Date of filing: 11.03.1999
(51) Int. Cl.: C03C 27/12, B32B 17/10, G02B 27/01, B29C 47/88, B65H 18/28, B65H 39/16, B29C 53/56

(54) **Intermediate film for laminated glass**
Zwisschenschicht für eine Verbundglasscheibe
Film intermédiaire pour un verre stratifié

(30) Priority: 11.03.1998 JP 5992998; 13.07.1998 JP 19755898
(43) Date of publication of application: 08.01.2003
(62) Divisional of application: 99939186.5
(73) Proprietor: SEKISUI CHEMICAL CO., LTD., Osaka-shi, Osaka 530-8565 (JP)
(72) Inventor: Omizu, Morimasa, Minakuchicho, Koka-gun, Shiga 528-8585 (JP); Shichiri, Tokushige, Shimamotocho, Mishima-gun Osaka 618-0021 (JP)
(74) Representative: Forstmeyer, Dietmar, Dr. rer. nat., Dipl.-Chem.

(56) References cited:
- PATENT ABSTRACTS OF JAPAN vol. 1999, no. 05, 31 May 1999 (1999-05-31) & JP 11 043355 A (SEKISUI CHEM CO LTD), 16 February 1999 (1999-02-16)

## Description

### TECHNICAL FIELD

The present invention relates to a roll of an intermediate film for laminated glass suited for a head-up display in its application to an automotive windshield, and a method for its manufacture.

### PRIOR ART

In the front of a motor car, an airplane or the like, the so-called windshield known also as front glass is used. The front glass is usually a glass laminate consisting of two faced glass sheets and an intermediate film for laminated glass as sandwiched between the glass sheets.

Recent years have mounted a need, from safety considerations, for windshield of an automobile, the instrument-generated information such as speed and other running data of an automobile, for instance, can be displayed on the so-called head-up display (HUD) within the same visual field of the driver as the windshield.

Regarding the mechanism of HUD, many systems'have heretofore been developed. In a typical system, the HUD display area does not exist on the surface of the windshield glass but the driver perceives the reflection of the data as a virtual image in the same position (that is to say, within the same visual field) as the windshield. However, since the laminated glass of windshield consists of two parallel sheets of glass, this system has the disadvantage that the driver has a double vision of the instrument, display.

To overcome this disadvantage, US Patent No.5013134 discloses a technology of disposing an intermediate film having a wedge angle within the windshield glass. US Patent No.5087502 discloses a wedge-shaped sheet and a method for its manufacture. Furthermore, US Patent No.5639538 discloses a sheet which is uniform in thickness over at least 20% of its total area extending from either edge thereof and diminishes gradually in thickness toward the mid-line and which is to be slit around the mid-line.

Because those intermediate films for laminated glass. are wedge-shaped in section, the above technologies have the disadvantage that trimming film are often produced in the lamination with grass and hence the efficiency is sacrificed. Moreover, since the sheet is partially uniform in thickness and wedge-shaped in the remainder, the risk is high for the deterioration of poor appearance along the borderline between the part uniform in thickness and the part having a wedge-shaped thickness profile in the lamination process.

When such an intermediate film having a wedged-shaped profile is applied to the curved wrap-around front glass, it is common practice to stretch the intermediate film in compliance with the surface configuration of the glass, thus making the film uniform in thickness.

As described typically in Japanese Kokai Publication Hei-3-209210, it is known that by using an intermediate film having a wedge-shaped thickness profile with its shape retained for the front glass having a head-up display function, a sharp reflection image can be formed without causing a double vision.

Meanwhile, any intermediate film having a wedge-shaped thickness profile is wound up in the manner of roll to form a cone due to ununiform thickness and it is necessary to vary the angle of the core according to the length of film to be wound. Furthermore, because the resulting roll is conical, there is naturally a limit to the length of film that can be wound per roll so that the transportation efficiency of rolls is decreased and the instability of the roll makes handling difficult. When a conical core is used for winding, the roll is cylindrical and stable but the length of film that can be wound per roll is further decreased to sacrifice the efficiency of transportation.

As an intermediate film which overcomes the above disadvantages, Japanese Kohyo Publication Hei-7-508690 describes an intermediate film which is uniform in thickness over a given distance from both edges of the film and diminishing in thickness symmetrically from the first-mentioned parts toward the center of the film, thereby allowing the film to be taken up in the form of a cylindrical roll with a constant radius.

However, the intermediate film described in Japanese Kohyo Publication Hei-7-508690 is so complicated in sectional configuration that it is not easy to manufacture and, in addition, has the disadvantage that wrinkles are liable to occur in the central part of relatively thin thickness.

### SUMMARY OF THE INVENTION

The present invention, developed in view of the above state of the art, has for its object to provide a roll of intermediate film for laminated glass which overcomes the disadvantages of the conventional roll of intermediate film for laminated glass and, as such, is easy to handle and contributory to transportation efficiency and a process for its production.

The roll of intermediate film for laminated glass of the present invention increases in thickness of the film from one edge to the other edge in the axial direction,
which comprises windings of two continuous strips of an intermediate film as wound in superimposition one on the other with its edge of one strip thinner in thickness being aligned with its edge of the other strip greater in thickness.

The method of producing a roll of intermediate film for laminated glass increases in thickness of the film from one edge to the other edge in the axial direction,
which comprises winding two continuous strips of an intermediate film as rolled up in superimposition one on the other with its edge of one strip thinner in thickness being aligned with its edge of the other strip greater in thickness.

### BRIEF DESCRIPTION OF THE DRAWINGS

Fig. 1 is an elementary section view showing an example of the roll of intermediate film for laminated glass in accordance with this invention.
Fig. 2 is an elementary section view of an intermediate film having a wedge-shaped thickness profile.
Fig. 3 is a perspective view showing the extrusion die for use in the production of an intermediate film having a wedge-shaped thickness profile.
Fig. 4 is a sectional view showing the conventional roll.

Each reference numeral represents:
11. core
12. intermediate film
13. extrusion die
131. orifice of resin

### DEATAILED DESCRIPTION OF THE INVENTION

The roll of intermediate film for laminated glass of the present invention is now described in detail.

The material for the intermediate film for laminated glass of the present invention is not particularly restricted but includes those materials which are conventionally used for the purpose. Thus polyvinyl butyral resin, ethylene-vinyl acetate copolymer, and polyvinyl chloride resin can be mentioned for example.

In this aspect of the present invention, the mode of increase in the thickness of intermediate film from one edge to the other in the axial direction may be a linearly incremental one, i.e. the so-called wedge profile, or may be an increase in thickness in the manner of a curve.

The rate of change in thickness of the intermediate film is preferably about 0.1 to 0.7 mm per meter of its width. For HUD use, the preferred rate of change in thickness of the intermediate film for laminated glass is about 0.2 to 0.3 mm per meter of its width.

Furthermore, the two strips of intermediate film for laminated glass may be equal, or more or less different in the rate of change in thickness.

The preferred thickness of the intermediate film for laminated glass is about 0.3 mm in the position of minimum thickness and about 1 mm in the position of maximum thickness. If the thickness of the intermediate film for laminated glass is less than 0.3 mm, the penetration resistance of the laminated glass will be insufficient and, in addition, a slack will be created in the film under its own weight during production. Conversely if 1 mm is exceeded, the penetration resistance will be excessive and a disadvantage will be inevitable in the cost-wise.

Continuous strips of intermediate film for laminated glass each increasing in thickness from one edge to the other in the axial direction can be produced'by adjusting the orifice of resin of each extrusion die for molding in accordance with the thickness of the desired film or by passing the extruded strips between a pair of rolls to control the shape and/or clearance of the desired film.

Where necessary, the intermediate film for laminated glass may be provided with a color band, either locally or throughout its area, and such a color band can be provided by coextrusion of a colored resin or by printing the necessary pattern on the surface of the intermediate film.

In the method of producing a roll of intermediate film for laminated glass of the present invention, two strips of intermediate film for laminated glass may be extruded either from a single extruder or from two extruders. When two extruders are used, the two strips of intermediate film for laminated glass need not be concurrently extruded but the two strips may be respectively taken up in rolls and, then, superimposed one upon the other. As an alternative, one strip of intermediate film for laminated glass is extruded and taken up in a conical fashion and the other strip is then extruded and wound onto the windings of the first strip. As a further alternative, the second strip of intermediate film for laminated glass may be extruded and wound in the superimposition the first strip wound in advance while the latter is continuously rewound from its roll to thereby provide a cylindrical roll.

The roll of intermediate film for laminated glass of the present invention comprises windings of two strips of intermediate film for laminated glass each increasing in thickness in the axial direction thereof from one edge to the other as wound in superimposition one on the other with its edge of one strip greater in thickness being aligned with its edge of the other strip thinner in thickness. Therefore, the resulting roll has a substantially cylindrical profile which is easy to transport and handle.

In the method of producing a roll of intermediate film for laminated glass of the present invention, two continuous strips of an intermediate film for laminated glass are.rolled up in superimposition one on the other with its edge of one strip greater in thickness being aligned with its edge of the other strip thinner in thickness, with the result that the resulting roll is a cylindrical roll with a substantially constant radius and, as such, can be easily handled and transport.

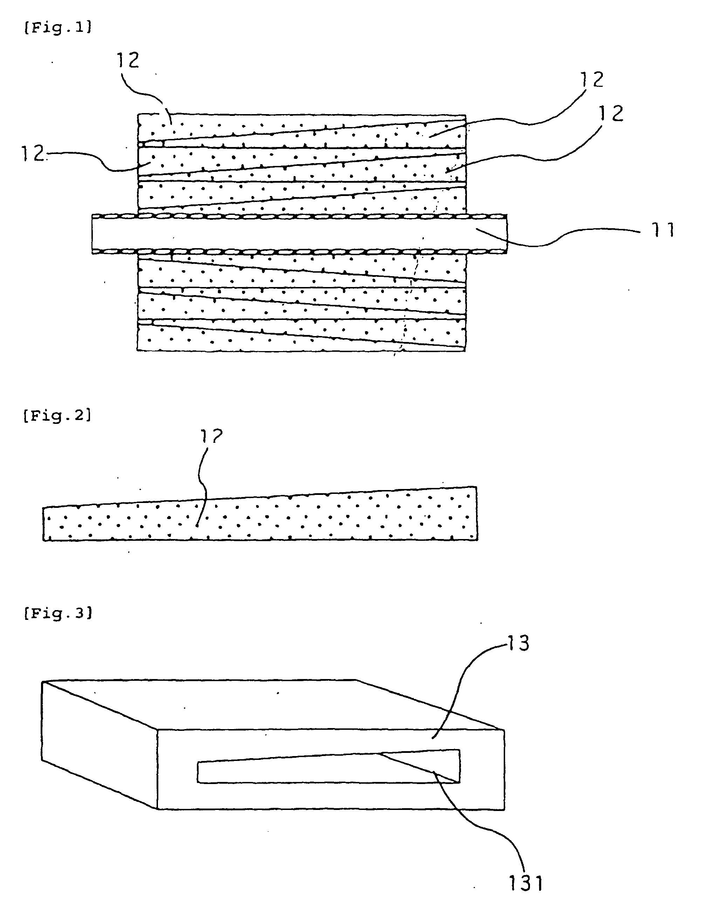

Fig. 1 is a schematic cross-section view showing an exemplary roll of an intermediate film for laminated glass of the present invention.

Referring to Fig. 1, the reference numeral 11 represents a core on which said intermediate film for laminated glass is wound 'to provide the roll of the present invention. The reference numeral 12 represents an intermediate film which, as best shown in Fig. 2, has a thickness profile 'increasing in thickness in the axial direction thereof from one edge to the other.

As shown, two continuous strips 12, 12 of intermediate film each having such a wedge-shaped thickness profile are superimposed one on the other with its edge of one strip 12 thinner in thickness being aligned with its edge of the other strip 12 greater in thickness.

The intermediate film 12 having said wedge-shaped profile can be produced, for example by using an extrusion die 13 having an orifice of resin 131 with its edge of one greater than the other edge in thickness as shown in Fig. 3.

In the roll of intermediate film for laminated glass of the present invention shown in Fig. 1, two continuous strips 12, 12 of intermediate film each having such a wedge-shaped thickness profile are superimposed one on the other with its edge of one strip 12 thinner in thickness being aligned with its edge of the other strip 12 greater in thickness. Therefore, the resulting roll has a substantially cylindrical profile which is easy to transport and handle.

The preferred embodiments of this invention have been described above with reference to the drawings but many changes and modifications can be made by those skilled in the art without departing from the appended claims.

For example, the core 11 need not always be employed in winding the intermediate film for laminated glass.

### BEST MODE FOR CARRYING OUT THE INVENTION

The following examples illustrate the present invention in further detail, and those examples are by no means defining the scope of the present invention.

### Example 1

Using a plasticized polyvinyl butyral resin and a biaxial extruder and the die shown in Fig. 3, a first strip of intermediate film having a wedge-shaped profile was produced. As shown in Fig. 2, this intermediate film for laminated glass had a thickness of 0.76 mm at one edge and a thickness of 0.98 mm at the other edge. Concurrently, using another biaxial extruder and the same die as illustrated in Fig. 3, a second strip of intermediate film having the same wedge-shaped thickness profile as the first strip was extruded. As shown in Fig. 1, the above two strips of intermediate film were superimposed one on the other with its edge of one strip thinner in thickness being aligned with its edge of the other strip greater in thickness and concurrently wound up on a cylindrical core, 200 mm in outer diameter, for a total of 150 turns to provide a cylindrical roll with a constant diameter of 730 mm.

### Comparative Example 1

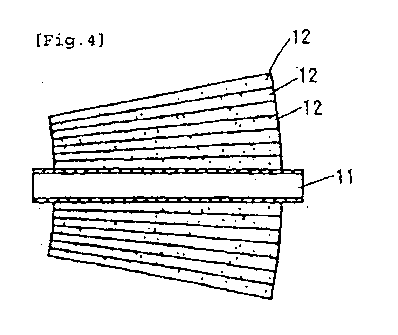

The procedure of Example 1 was repeated to produce two strips of intermediate film having the same wedge-shaped thickness profile. As. shown in Fig. 4, the two strips were wound up in superimposition on a cylindrical core, 200 mm in outer diameter, with its edge of one strip thinner in thickness being aligned with its edge of the other strip thinner in thickness for a total of 300 turns. The resulting roll was a conical roll which was 660 mm in diameter at one end and 790 mm in diameter at the other end.

### INDUSTRIAL APPLICABILITY

The roll of intermediate film for laminated glass of the present invention consists of two strips of an intermediate film for laminated glass having a wedge-shaped thickness profile in the axial direction as wound up in superimposition one on the other with its edge of one strip thinner in thickness being aligned with its edge of the other strip greater in thickness, with the result that the resulting roll is a cylindrical roll with a substantially constant radius which is easy to handle and transport.

In the method of producing a roll of intermediate film for laminated glass of the present invention, two strips of an intermediate film for laminated glass are rolled up in superimposition one on the other with its edge of one strip greater in thickness being aligned with its edge of the other strip thinner in thickness, with the result that the resulting roll is a cylindrical roll with a substantially constant radius and, as such, can be easily handled and transport.

## Claims

1. A roll of intermediate film for laminated glass increasing in thickness of the film from one edge to the other edge in the axial direction,
which comprises windings of two continuous strips of an intermediate film as wound in superimposition one on the other with its edge of one strip thinner in thickness being aligned with its edge of the other strip greater in thickness.

2. A method of producing a roll of intermediate film for laminated glass
increasing in thickness of the film from one edge to the other edge in the axial direction,
which comprises winding two continuous strips of an intermediate film as rolled up in superimposition one on the other with its edge of one strip thinner in thickness being aligned with its edge of the other strip greater in thickness.

## Patentansprüche

1. Rolle eines Zwischenschichtfilms für Verbundglas, wobei die Dicke des Films von einer Kante zur anderen Kante in axialer Richtung zunimmt, welche Wicklungen von zwei-durchgehenden Streifen eines Zwischenschichtfilms umfasst, die deckungsgleich übereinander gewickelt sind, wobei die dünnere Kante von einem Streifen mit der dickeren Kante des anderen Streifens ausgerichtet ist.

2. Verfahren zur Herstellung einer Rolle eines Zwischenschichtfilms für Verbundglas, wobei die Dicke des Films von einer Kante zur anderen Kante in axialer Richtung zunimmt, welches das Wickeln von zwei durchgehenden Streifen eines Zwischenschichtfilms umfasst, die deckungsgleich übereinander gerollt werden, wobei die dünnere Kante von einem Streifen mit der dickeren Kante des anderen Streifens ausgerichtet ist.

## Revendications

1. Rouleau de film intermédiaire pour verre stratifié, dont l'épaisseur augmente d'un bord du film à l'autre en direction axiale, comprenant des enroulements de deux bandes continues d'un film intermédiaire, enroulées en superposition l'une sur l'autre, le bord de moindre épaisseur de l'une étant aligné sur le bord de plus grande épaisseur de l'autre bande.

2. Procédé de production d'un rouleau de film intermédiaire pour verre stratifié, dont l'épaisseur augmente d'un bord à l'autre en direction axiale, comprenant l'enroulement de deux bandes continues d'un film intermédiaire, enroulées en superposition l'une sur l'autre, le bord de moindre épaisseur de l'une étant aligné sur le bord de plus grande épaisseur de l'autre.
